Europäisches Patentamt

European Patent Office

Office européen des brevets

(11) Veröffentlichungsnummer : **0 071 595**
**B1**

(12) **EUROPÄISCHE PATENTSCHRIFT**

(45) Veröffentlichungstag der Patentschrift :
26.09.84

(51) Int. Cl.³ : **B 21 F 27/10, B 23 K 11/10**

(21) Anmeldenummer : **82890095.1**

(22) Anmeldetag : **29.06.82**

(54) **Vielpunktschweissmaschine zum Herstellen von Gittern oder Gitterrosten.**

(30) Priorität : **28.07.81 AT 3328/81**

(43) Veröffentlichungstag der Anmeldung :
**09.02.83 Patentblatt 83/06**

(45) Bekanntmachung des Hinweises auf die Patenterteilung : **26.09.84 Patentblatt 84/39**

(84) Benannte Vertragsstaaten :
**BE CH DE FR GB IT LI NL**

(56) Entgegenhaltungen :
**AT-B- 252 692**
**AT-B- 267 292**
**DE-B- 1 565 525**
**DE-B- 1 904 590**
**DE-B- 1 926 598**

(73) Patentinhaber : **EVG Entwicklungs- u. Verwertungs-Gesellschaft m.b.H.**
**Vinzenz-Muchitsch-Strasse 36**
**A-8011 Graz (AT)**

(72) Erfinder : **Gött, Hans, Dipl.-Ing.**
**Petersbergenstrasse 69**
**A-8042 Graz (AT)**
Erfinder : **Scherr, Rudolf, Dipl.-Ing.**
**Ziegelstrasse 23**
**A-8045 Graz (AT)**
Erfinder : **Ritter, Josef, Dipl.-Ing.Dr.**
**Stenggstrasse 33**
**A-8043 Graz (AT)**
Erfinder : **Ritter, Klaus, Dipl.-Ing.**
**Peterstalstrasse 157**
**A-8042 Graz (AT)**
Erfinder : **Ritter, Gerhard, Dipl.-Ing. Dr.**
**Unterer Plattenweg 47**
**A-8043 Graz (AT)**

(74) Vertreter : **Holzer, Walter, Dipl.-Ing. et al**
**Patentanwälte Dipl.-Ing. Dr.techn. Schütz Alfred Dipl.-Ing. Dr.techn. Pfeifer Rudolf Dr.phil. Mrazek Engelbert Dipl.-Ing. Holzer Walter Dipl.-Ing. Pfeifer Otto**
**Fleischmanngasse 9 A-1040 Wien (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vielpunktschweißmaschine zum Herstellen von Gittern oder Gitterrosten aus einander kreuzenden Längselementen und Querdrähten, mit einem für Doppelpunktschweißungen in Richtung der Längselemente geeigneten Schweißelektrodensystem, zwei in festem gegenseitigen Abstand auf Einschußlinien angeordneten Drahtführungen zum gleichzeitigen Einschießen zweier Querdrähte, auf einem gemeinsamen, in Richtung des Gittervorschubes um einen dem Abstand der Symmetrieebene der Einschußlinien von der Symmetrieebene der Schweißlinien des Schweißelektrodensystems entsprechenden Betrag verschiebbaren Träger angeordneten Querdrahtzubringern und Einrichtungen zum Vorschieben des Gitters oder Gitterrostes nach jedem Schweißvorgang. Bei normalen Gittern sind auch die Längselemente Drähte, und diese werden mit den Querdrähten an den Kreuzungspunkten verschweißt; bei Gitterrosten bestehen die Längselemente hingegen aus hochkant stehenden Flacheisenbändern, in welche die Querdrähte meist so tief eingeschweißt werden, daß sie bündig mit den Bandoberkanten zu liegen kommen.

Bei einer bekannten Gitterschweißmaschine der angegebenen Gattung (vgl. AT-B-267.292) sind die die Querdrähte von den Einschußlinien zu den Schweißlinien fördernden Querdrahtzubringer als fest auf dem verschiebbaren Träger montierte und von diesem in gleicher Richtung auskragende Transportarme ausgebildet, die in einem festen, einem vorgegebenen Querdrahtabstand und dem ebenfalls festen Abstand der Querdraht-Einschußlinien entsprechenden Abstand Rasten zur Aufnahme zweier Querdrähte aufweisen. Ferner sind an den Transportarmen in Gittervorschubrichtung vor diesen Rasten Haken vorgesehen, die mit den Gitterlängselementen bereits verschweißte Querdrähte erfassen und das Gitter mittels dieser Querdrähte bei jeder Zubringerbewegung der Transportarme schrittweise weiterbewegen.

Das Schweißelektrodensystem führt dabei Doppelpunktschweißungen aus, bei welchen jeweils die von einem Längselement und den beiden Querdrähten gebildeten Kreuzungspunkte in Serie in einer zwischen zwei Elektroden verlaufenden Schweißstrecke liegen.

Gegenüber anderen, gleichfalls bekannten Gitterschweißmaschinen, bei welchen in jeder Schweißstrecke jeweils nur ein einziger Querdraht an ein Längselement angeschweißt wird, haben die vorstehend geschilderten, mit Doppelpunktschweißungen arbeitenden Maschinen den Vorteil einer verdoppelten Produktivität, wobei der Energiebedarf für das gleichzeitige Anschweißen zweier Querdrähte je Schweißstrecke nicht wesentlich größer als der für das Anschweißen nur eines einzigen Querdrahtes in jeder Schweißstrecke ist. Ein weiterer Vorteil besteht darin, daß kein Verwerfen des Gitters eintritt, weil alle Schweißpunkte längs ein und desselben Querdrahtes am gleichen Potential liegen, so daß in den Querdrähten keine diese Drähte erhitzenden Ströme Fließen können, die ein Verwerfen des Gitters verursachen könnten.

Ein Mangel der einleitend beschriebenen bekannten, mit Doppelpunktschweißung arbeitenden Gitterschweißmaschine liegt darin, daß es sich bei ihr um eine reine Einzweckmaschine handelt, die nur Gitter oder Gitterroste mit einem einzigen, unveränderbar vorgegebenen, dem gegenseitigen Abstand der Querdraht-Einschußlinien gleichen Abstand der Querdrähte herzustellen vermag, wogegen die mit Einzelpunktschweißungen arbeitenden Maschinen, bei welchen in jeder Schweißstrecke nur ein einziger Querdraht an ein Längselement angeschweißt wird, Gitter oder Gitterroste mit ganz beliebigen, gegebenenfalls auch während des Betriebes der Maschine änderbaren Querdrahtabständen zu produzieren vermögen.

Aus der AT-B-252.692 ist eine Geradführungsvorrichtung bekannt, die insbesondere für Querdrahtzubringer bei Gitterschweißmaschinen geeignet ist und im wesentlichen aus gelenkig verbundenen und kraftschlüssig auf gegenseitige Schwenkbewegung miteinander gekuppelten Tragund Schwinghebeln besteht. In bekannter Weise können zwei solche Geradführungsvorrichtungen so ausgebildet, miteinander gekuppelt und gesteuert werden, daß die Schwinghebel jeweils zwei Querdrähte von in einem vorgegebenen Abstand voneinander angeordneten Einschußlinien zu in einem anderen Abstand voneinander angeordneten Schweißlinien eines Schweißelektrodensystems fördern. Zur Änderung der Querdrahtabstände ist es dabei aber erforderlich, die Schwenkwinkel der Traghebel getrennt und in unterschiedlichem Ausmaß zu ändern, was insbesondere dann schwierig ist und relativ komplizierte Verstelleinrichtungen erfordert, wenn die Änderung der Querdrahtabstände während der zyklischen Arbeitsbewegung der Querdrahtzubringer erfolgen soll.

Aufgabe der Erfindung ist es nun, eine Vielpunktschweißmaschine der einleitend angegebenen Gattung derart weiterzubilden, daß mit ihr auf konstruktiv einfache und betriebssichere Weise Gitter oder Gitterroste mit beliebigen, gegebenenfalls während des Produktionsvorganges änderbaren Querdrahtabständen hergestellt werden können, so daß die erfindungsgemäße Maschine die Vorteile der bekannten Maschine mit Doppelpunktschweißungen mit den Vorteilen der bekannten Maschinen mit Einzelpunktschweißungen in sich vereinigt.

Diese Aufgabe wird erfindungsgemäß dadurch gelöst, daß bei einer Vielpunktschweißmaschine der einleitend angegebenen Gattung die Querdrahtzubringer entsprechend dem Hubweg von einer der beiden lagenfesten Einschußlinien zu einer von zwei lagenveränderlichen Schweißlinien am Träger verschiebbar gelagert sind und daß Einrichtungen vorgesehen sind, mittels welcher die Längen der Hubwege der beiden Querdrahtzubringer gegenüber dem Hubweg des Trägers gegensinnig um gleiche Beträge veränderbar sind.

Wie nachfolgend noch genauer erläutert wird, erzeugt eine solche Maschine, wenn sie auf gleich große Hubwege beider Zubringer eingestellt ist, Gitter mit gleichbleibenden Querdrahtabständen, die dem gegenseitigen Abstand der Querdraht-Einschußlinien entsprechen. Durch gegensinnige Änderung der Hubwege der beiden Zubringer können aber die Querdrahtabstände vor oder auch während der Produktion eines Gitters vergrößert oder verkleinert werden.

Die Erfindung wird nun unter Bezugnahme auf die Zeichnungen an zwei Ausführungsbeispielen näher erläutert. Es zeigt :

Figur 1 ein Schema der Bewegungsabläufe der beiden Querdrahtzubringer ; die

Figuren 2 und 3 die Antriebskinematik des Zubringersystems in zwei verschiedenen Arbeitsphasen ;

Figur 4 eine Draufsicht auf das Zubringersystem samt einem Schema der hydraulischen Steuerung ;

Figur 5 eine Seitenansicht zu Figur 4 ;

Figur 6 das Elektrodensystem und das Zubringersystem im Augenblick der Übernahme der Querdrähte von den Einschußlinien ;

Figur 7 das Elektrodensystem und das Zubringersystem mit auf den Schweißlinien angeordneten Querdrähten ;

Figur 8 eine zweite Ausbildung des Elektrodensystems ;

Figur 9 ein Detail zu Figur 8 ;

Figur 10 eine dritte Ausbildung des Elektrodensystems ;

Figur 11 ein zweites Ausführungsbeispiel einer Maschine nach der Erfindung in Seitenansicht und

Figur 12 eine Vorderansicht zu Figur 11.

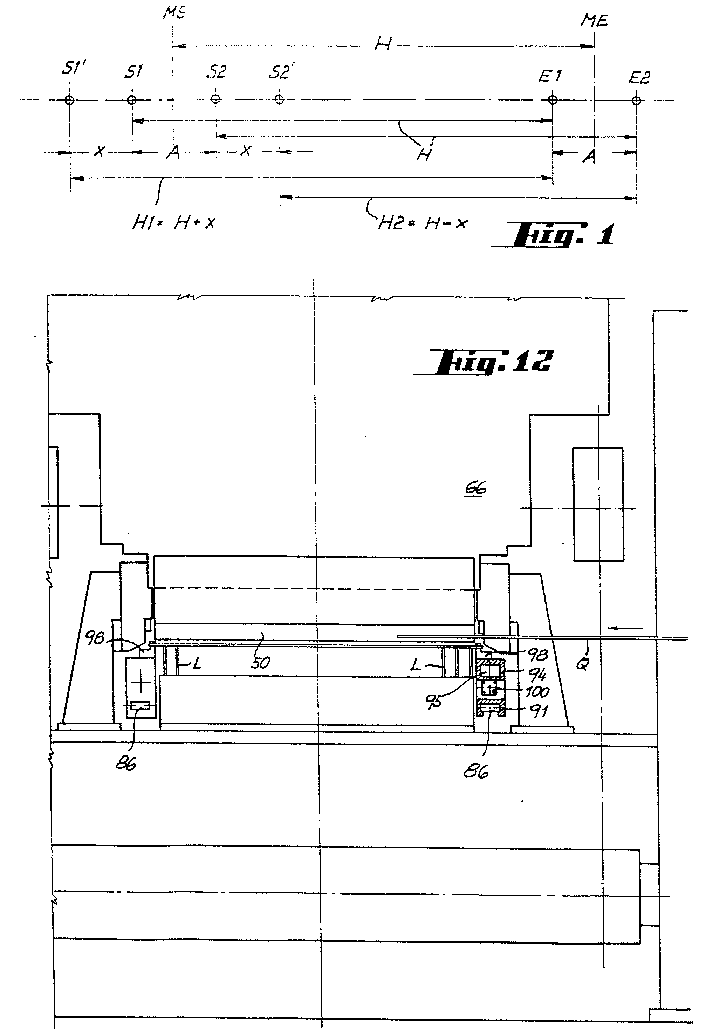

In Figur 1 sind zur Erläuterung des Grundgedankens der Erfindung verschiedene Relativlagen der Schweißlinien zu den Querdraht-Einschußlinien, gesehen in Richtung dieser Linien, d. h. entsprechend einer Seitenansicht der Schweißmaschine, dargestellt. Die beiden Einschußlinien E1 und E2 sind voraussetzungsgemäß lagenfest, wogegen die zugeordneten Schweißlinien gemäß der Aufgabenstellung der Erfindung zur Änderung der Querdrahtabstände lagenveränderlich sein sollen. Wenn die jeweils gleichzeitig längs der beiden Einschußlinien E1 und E2 in die Schweißmaschine eingeschossenen Querdrähte von den zugeordneten Zubringern um den gegenseitigen Abstand H der Symmetrieebenen ME und MS der Einschußlinien bzw. Schweißlinien zum Schweißelektrodensystem hin verschoben werden, so gelangen sie zu den Schweißlinien S1 bzw. S2, die gleichen gegenseitigen Abstand A haben wie die Einschußlinien E1 und E2. Bei einer gegensinnigen Längenänderung der Hubwege H1 und H2 der Querdrähte um den Wert x (H1 = H + x, H2 = H − x) ergeben sich die Schweißlinien S1′ und S2′, deren gegenseitiger Abstand um 2 x größer ist als der Einschußlinienabstand A. Durch Verkleinerung des Hubweges H1 und entsprechende Vergrößerung des Hubweges H2 können auch Schweißlinien erhalten werden, deren gegenseitiger Abstand kleiner als der Einschußlinien abstand A ist. Wenn die gegensinnige Änderung der Hublängen H1 und H2 der beiden Zubringer innerhalb eines Arbeitszyklus der Schweißmaschine erfolgt, wie dies bei den nachfolgend beschriebenen Ausführungsbeispielen der Erfindung möglich ist, können die Querdrahtabstände während der Gitterproduktion verändert werden.

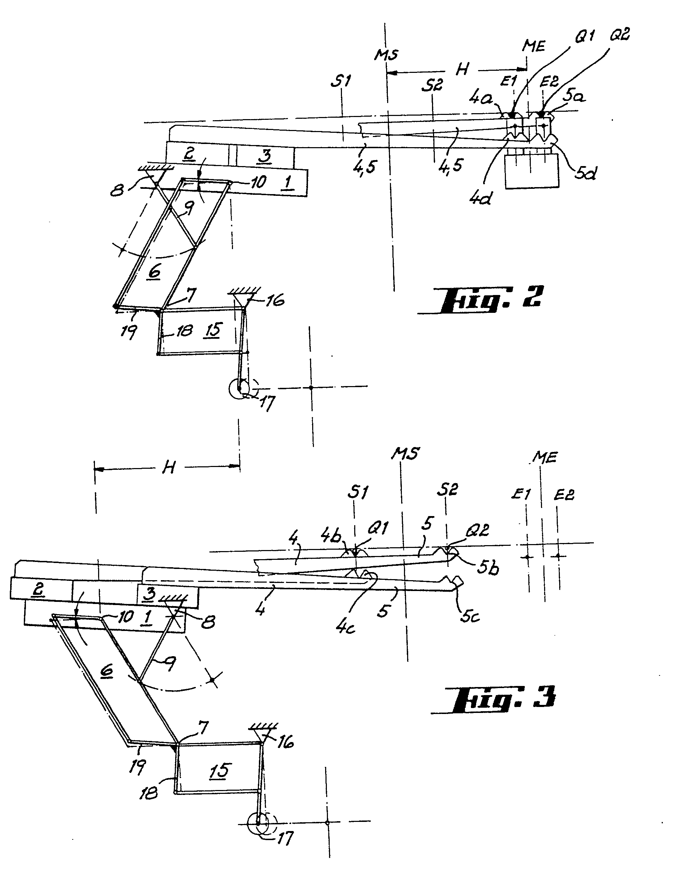

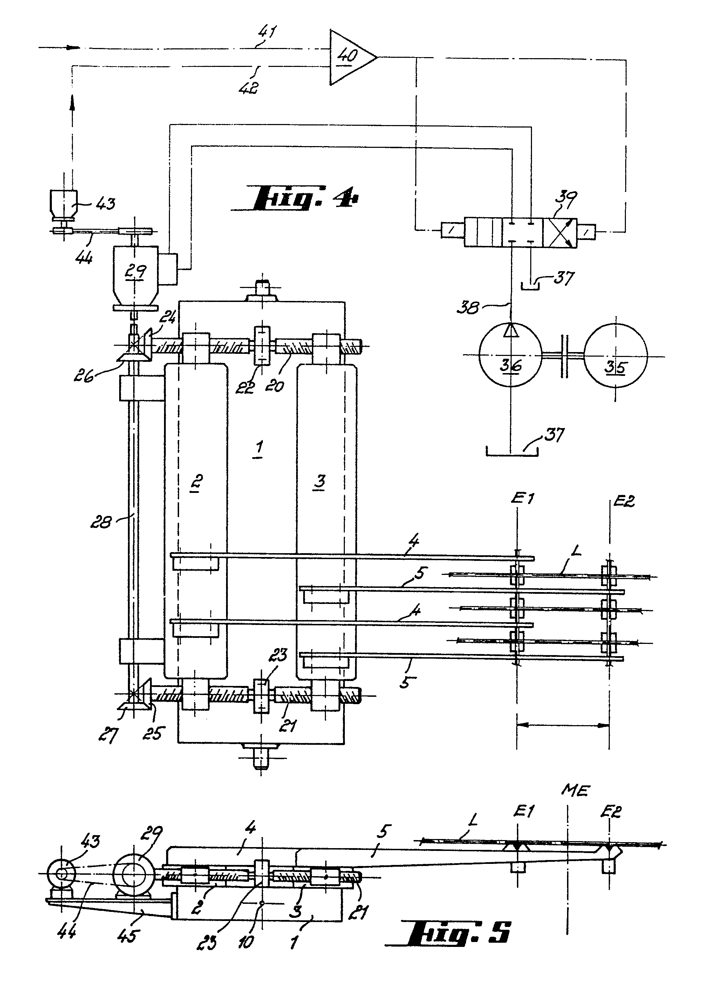

Wie aus den Figuren 2 und 3 zu entnehmen ist, ist bei einem Ausführungsbeispiel der Erfindung ein Tragbalken 1, auf dem in später noch näher zu beschreibender Weise zwei Führungsbalken 2 und 3 für als Querdrahtzubringer dienende Transportarme 4 und 5 gegensinnig verschiebbar angeordnet sind, mit einem ersten Lenkerviereck 6 gelenkig verbunden. Das Lenkerviereck 6 steht durch ein Gelenk 7 mit einem zweiten Lenkerviereck 15 in Verbindung. Überdies ist das Lenkerviereck 6 an einer in einem maschinenfesten Lager 8 schwenkbar gelagerten Schwinge 9 angelenkt. Diese Schwinge kann durch bekannte und deshalb nicht dargestellte Antriebsmittel, wie Kolben oder Kurbel, zwischen den beiden in den Figuren 2 und 3 gezeigten Grenzlagen hin- und herbewegt werden, wobei der Schwerpunkt 10 des Tragbalkens 1 zwischen seinen beiden Extremlagen die Wegstrecke H zurücklegt.

Das zweite Lenkerviereck 15, von dem ein Eckpunkt in einem maschinenfesten Lager 16 gelenkig gelagert ist, trägt eine Nockenabtastrolle 17, die durch nicht dargestellte, weil bekannte Mittel, beispielsweise eine Feder, an den Umfang eines gleichfalls nicht dargestellten Steuernockens gedrückt wird. Der dem die Abtastrolle 17 tragenden Lenker gegenüberliegende Lenker 18 des Lenkervierecks 15 ist starr mit einem Lenker 19 des Lenkervierecks 6 verbunden, so daß jede Bewegung der Nockenabtastrolle 17 über das Gelenk 7 und die starr miteinander verbundenen, einen Winkelhebel bildenden Lenker 18 und 19 auf das Lenkerviereck 6 übertragen wird.

Aus einem Vergleich der Figuren 2 und 3 ist der Bewegungsablauf beim Zubringen der Querdrähte erkennbar. In Figur 2 haben die nicht zur Gänze dargestellten, mit ihren Rasten in den Stellungen 4a und 5a befindlichen Transportarme 4, 5 die Querdrähte Q1 bzw. Q2 soeben aus Drahtführungen bei E1 und E2 herausgehoben. Die Schwinge 9 bewegt sich nun unter der Wirkung ihres Antriebes aus der in Figur 2 gezeigten Lage in die Lage nach Figur 3.

Die Transportarme 4, 5 gelangen dabei mit ihren Rasten aus den Stellungen 4a, 5a in Figur 2 in die Stellungen 4b, 5b in Figur 3, wobei ihre gegensinnige Bewegung um den Betrag x später noch näher zu erklären sein wird.

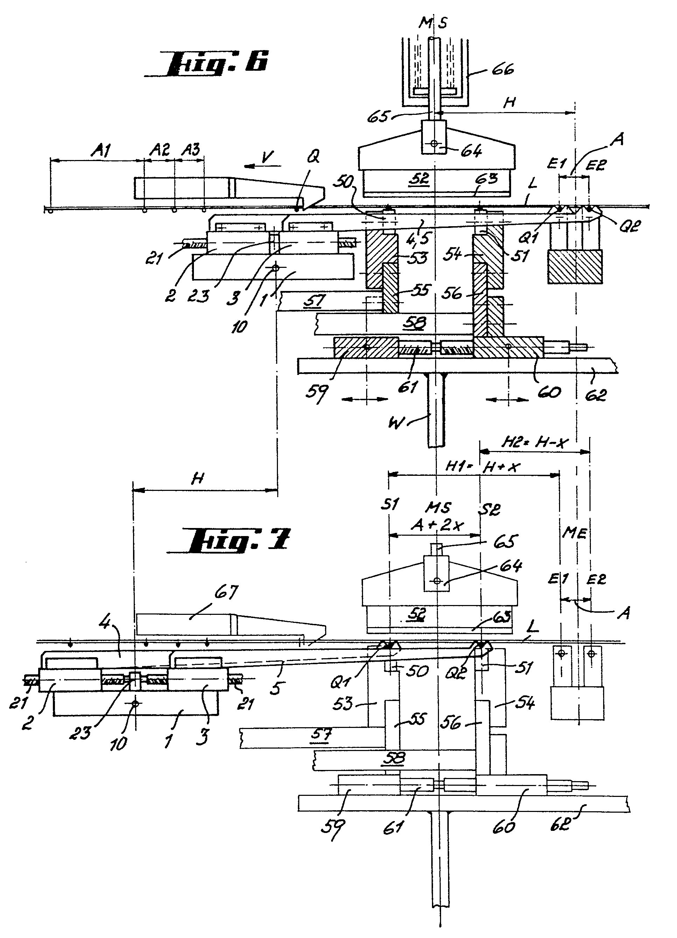

Sobald die Transportarme 4, 5 mit ihren Rasten in die Stellungen 4b, 5b gelangt sind, wird die Nockenabtastrolle 17 von dem Steuernocken aus der in Figur 3 strichpunktiert gezeichneten Stellung in die in Figur 3 in vollem Strich gezeichnete Stellung verschoben, wobei die beiden Gelenkvierecke 6 und 15 derart verschwenkt werden, daß die einzelnen Lenker aus den in Figur 3 strichpunktiert gezeichneten in die dort gleichfalls in vollem Strich gezeichneten Lagen übergehen. Dadurch wird der Tragbalken 1 um seinen Schwerpunkt 10 verschwenkt, und die Transportarme nehmen mit ihren Rasten die in Figur 3 mit 4c und 5c bezeichneten Stellungen ein. Die Querdrähte Q1 und Q2 werden dabei auf die in den Figuren 6 und 7 erkennbaren, später erläuterten unteren Elektroden 50, 51 abgelegt, wobei die Transportarme 4, 5 außer Eingriff mit den Querdrähten gelangen.

Kehrt nun die Schwinge 9 in die in Figur 2 gezeichnete Stellung zurück, so gelangen die Transportarme 4, 5 mit ihren Rasten in die dort mit 4d und 5d bezeichneten Stellungen, wobei sie sich während der ganzen Rückkehrbewegung unterhalb der Längselemente und der Querdrähte, also auch außer Eingriff mit diesen, befinden.

Nun kehrt die Nockenabtastrolle 17 in die in Figur 2 strichpunktiert gezeichnete Lage zurück und die Achsen der die beiden Lenkerviereck 6 und 15 bildenden Lenker gehen aus der in vollem Strich gezeichneten Lage wieder in die strichpunktiert gezeichnete Lage über. Die Transportarme schwenken dabei aus den mit 4d und 5d bezeichneten Stellungen in die in Figur 2 mit 4a und 5a bezeichneten Stellungen zurück und heben bei dieser Bewegung zwei neue Querdrähte Q1, Q2 aus den Drahtführungen bei E1, E2 heraus und stellen sie für einen neuen Zuführungsschritt bereit.

Die Enden der beiden Führungsbalken 2, 3 werden gemäß den Figuren 4 und 5 von zwei Spindeln 20, 21 durchsetzt, die in Lagern 22, 23, welche am Tragbalken 1 unverschieblich befestigt sind, gelagert sind und in die beidseits der Lager 22, 23 gegenläufige Gewinde eingeschnitten sind. An einem Ende ist jede der Spindeln 20, 21 drehfest mit einem Kegelrad 24 bzw. 25 verbunden, das mit einem weiteren Kegelrad 26 bzw. 27 in Eingriff steht.

Die beiden Kegelräder 26, 27 sitzen drehfest auf einer gemeinsamen Welle 28, die ihrerseits von einem Hydraulikmotor 29 antreibbar ist. Eine von einem Motor 35 angetriebene Pumpe 36 bezieht Öl aus einem Ölsumpf 37 und fördert dieses in eine Speiseleitung 38, in die ein elektrohydraulisches Ventil 39 eingefügt ist. Dieses elektrohydraulische Ventril 39 steht unter der Steuerwirkung eines Regelverstärkers 40.

Der Regelverstärker 40 steht einerseits über eine Leitung 41 mit einem nicht dargestellten elektronischen Programmgeber in Verbindung und anderseits über eine Leitung 42 mit einem Impulsgeber 43, der, beispielsweise mittels eines Keilriemens 44, vom hydraulischen Motor 29 antreibbar ist und den Istwert der jeweiligen Lage der beiden Führungsbalken 2, 3 längs der Spindeln 20, 21 rückmeldet. Der Hydraulikmotor 29 und der Impulsgeber 43 sind auf einer in Figur 5 erkennbaren, am Tragbalken 1 befestigten Konsole 45 angeordnet, so daß sie alle Bewegungen des Tragbalkens 1 mitmachen. Die Zuleitungen zum Hydraulikmotor 29 und zum Impulsgeber 43 sind biegsam ausgebildet, so daß die Bewegungsfreiheit dieser Bauteile nicht behindert ist.

Der elektronische Programmgeber verfügt über einen vorprogrammierten Sollwertgeber für jene Relativlage der Führungsbalken 2, 3, welche der Stellung dieser Führungsbalken bei Entnahme von Querdrähten aus den Drahtführungen bei E1 und E2 entspricht. Ferner sind mehrere, für wählbare Relativlagen der Führungsbalken 2, 3 programmierbare Sollwertgeber vorgesehen, um Gitter mit erforderlichenfalls auch während des Betriebes beliebig änderbaren Querstababständen erzeugen zu können.

Weiters sind zwei (nicht dargestellte) Impulsgeber vorgesehen, von denen der eine jeweils in der in Figur 2 gezeigten Grenzlage des Transportbalkens 1 einen Impuls aussendet, durch den einer der Sollwertgeber für wählbare Relativlagen der Führungsbalken 2, 3 angesteuert wird, worauf diese Führungsbalken in die dem augenblicklich gewünschten Querdrahtabstand entsprechende Relativlage gebracht werden. Der zweite Impulsgeber sendet jeweils in der in Figur 3 gezeigten Grenzlage des Tragbalkens 1 einen Impuls aus, durch den der vorprogrammierte Sollwertgeber für die Tragbalkenrelativlage angesteuert wird, der dann die Führungsbalken 2, 3 wieder in die zur Entnahme neuer Querdrähte aus den Drahtführungen bei E1 und E2 nötige Relativlage bringt. Die von den beiden Impulsgebern ausgehenden Impulse werden einem rückstellbaren Zählwerk zugeleitet und in diesem summiert.

Jedem der für wählbare Relativlagen der Führungsbalken 2, 3 programmierbaren Sollwertgeber ist ein gleichfalls programmierbarer Schrittzahlgeber zugeordnet. Die Anzahl der im rückstellbaren Zählwerk aufsummierten Impulse wird mit der vorprogrammierten Schrittzahl des jeweils an den Regelkreis angeschalteten Schrittzahlgebers verglichen. Sobalt Koinzidenz erreicht ist, werden der jeweils an den Regelkreis angeschaltete Schrittzahlgeber und der ihm zugeordnete Geber für wählbare Relativlagen der Führungsbalken 2, 3 vom Regelkreis abgeschaltet und es wird der nächste Schrittzahlgeber mit dem ihm zugeordneten Geber für wählbare Relativlagen der Führungsbalken an den Regelkreis angeschaltet, wobei gleichzeitig das Zählwerk auf Null zurückgestellt wird. Dieser Aufbau des Programmgebers ermöglicht es, innerhalb ein und derselben Gitterbahn wählbare Anzahlen von Querdrähten in wählbaren Abständen anzuordnen.

Von dem soeben beschriebenen elektronischen Programmgeber geht über eine Leitung 41 an den Regelverstärker 40 ein Signal, das einer bestimmten, gewünschten Relativlage der Führungsbalken 2, 3 entspricht. Der Regelverstärker 41 beaufschlagt nun das elektrohydraulische Ventil 39 und bringt es in jene Schaltstellung, durch welche der Hydraulikmotor 29 im Sinne einer Annäherung der jeweiligen Lage der Führungsbalken 2, 3 an die gewünschte Relativlage angetrieben wird. Gleichzeitig mit dem Tätigwerden des Hydraulikmotors 29 sendet der Impulsgeber 43 Impulse über die Leitung 42 an den Regelverstärker 40, welche die sich verändernde Istlage der Führungsbalken 2, 3 rückmelden. Sobald Ist- und Sollwert der Relativlage übereinstimmen, wird das elektrohydraulische Ventil 39 in die in Figur 4 gezeigte neutrale Schaltstellung gebracht und der Hydraulikmotor bleibt so lange stehen, bis dem Regelverstärker 40 über die Leitung 41 ein neuer Signalbefehl zugeleitet wird.

Da moderne Hydraulikmotoren sehr hohe Umdrehungszahlen erreichen, ist ein Umstellen der Relativlagen der Führungsbalken 2, 3 innerhalb der kurzen Zeit, die der Tragbalken 1 benötigt, um von der in Figur 2 gezeigten in die in Figur 3 gezeigte Lage zu gelangen, leicht möglich. Wie man aus den Figuren 4 und 5 noch erkennen kann, erfolgt das Verschieben der Führungsbalken 2, 3 stets um gleich große und entgegengesetzt gerichtete Beträge, wodurch sich die unterschiedlichen Hubwege H + x und H − x der als Zubringer fungierenden Transportarme 4, 5 ergeben. Es sei erwähnt, daß sich der gleiche Effekt auch auf andere Weise, etwa durch Verwendung von gegensinnig beaufschlagten Kolben anstelle der gezeigten Spindeln erreichen ließe.

Gitter mit unterschiedlichen Querdrahtabständen erfordern eine Anpassung des gegenseitigen Abstandes der Schweißelektroden jeder Doppelpunktschweißstrecke an den jeweiligen Querdrahtabstand. In den Figuren 6 und 7 erkennt man Schweißelektroden 50, 51 einer Doppelpunktschweißstrecke, mit denen auf der gegenüberliegenden Seite der Gitterherstellungsebene eine passive Strombrücke 52 zusammenwirkt. Figur 6 zeigt den Augenblick, in dem die Transportarme 4, 5 die Querdrähte an den Einschußlinien E1, E2 übernehmen, Figur 7 den Augenblick des Auflegens der Querdrähte Q1, Q2 auf die im Querdrahtabstand A + 2 x voneinander entfernt angeordneten unteren Elektroden 50, 51.

Die Elektroden 50, 51 sind mit Hilfe von Elektrodenträgern 53, 54 mit Sammelschienen 55, 56 verbunden, die über Zuleitungen 57, 58 an die Sekundärwindungen nicht dargestellter Schweißtransformatoren angeschlossen sind. Die Zuleitung 58 durchsetzt im dargestellten Ausführungsbeispiel die Sammelschiene 55 und ist gegen diese durch eine nicht dargestellte Isolierschicht elektrisch isoliert. Die Sammelschienen 55, 56 sind auf Führungslatten 59, 60 befestigt, die mit einer Spindel 61 in Eingriff stehen, deren beide Hälften gegenläufige Gewinde aufweisen und die bezüglich einer maschinenfesten Tragplatte 62 unverschieblich gelagert ist.

Die Spindel 61 wird in analoger Weise wie die Spindeln 20, 21 in den Figuren 4 und 5 von einem Hydraulikmotor angetrieben und gestattet es, die auf der Tragplatte 62 gleitfähig gelagerten Führungsplatten 59, 60 und alle mit diesen Führungsplatten verbundenen Teile um gegensinnig gleiche Beträge x zu verschieben. Die elektronische Einrichtung, welche die Größe der Verschiebung der Schweißelektroden regelt, ist völlig gleich aufgebaut wie die im Zusammenhang mit den Figuren 4 und 5 beschriebene.

Der die Schweißelektrodenverschiebung bewirkende Regelverstärker wird stets dann, wenn das Zählwerk des elektronischen Programmgebers auf Null zurückgestellt wird, an den in diesem Augenblick an den Regelkreis neu angeschalteten Geber für wählbare Relativlagen der Führungsbalken 2, 3 angeschlossen. Dadurch erfolgt eine Verstellung der Elektroden 50, 51 auf einen dem Sollabstand der Gitterquerdrähte entsprechenden Abstand. Sobald die Elektroden die neuen Lagen eingenommen haben, wird die Verbindung zwischen dem Regelverstärker für die Schweißelektrodenverschiebung und dem Geber für die Relativlagen der Führungsbalken wieder unterbrochen und sie bleibt dann bis zur nächsten Rückstellung des Zählwerkes auf Null unterbrochen. Erst dann wird der Regelverstärker zur Anpassung des Elektrodenabstandes an den nächsten Relativlagengeber für die Führungsbalken angeschlossen.

Die Strombrücke 52, die mit einer auswechselbaren Verschleißschiene 63 versehen ist, ist mittels eines Gelenkes 64 und eines gefederten Stößels 65 in bekannter Weise an einem auf- und abbewegbaren Elektrodenbalken 66 angelenkt.

Ein Transporthaken 67 erfaßt mit den Längselementen L des Gitters bereits verschweißte Querdrähte Q und zieht, an diesen angreifend, das Gitter jeweils um den doppelten Querdrahtabstand vorwärts. Der Transporthaken kann, wie an sich bekannt, einen integralen Bestandteil der Schweißmaschine bilden und unmittelbar von dieser angetrieben werden, er kann aber auch, wie gleichfalls bekannt, zu einer eigenen, mit der Schweißmaschine synchronisierten Gittertransporteinrichtung gehören.

Haben die Querdrähte dreier aufeinanderfolgender Gittermaschen die Abstände A1, A2 und A3 voneinander, so ist die Länge des erforderlichen Vorschubschrittes V, um welchen die Haken 67 das Gitter weiter transportieren müssen, gegeben durch

$$V = A2 + (A1 + A3)/2,$$

woraus sich im Falle gleichen Querdrahtabstandes A der Vorschubschritt V = 2 A ergibt.

Sollen Gitter mit relativ großen Maschen erzeugt werden, bei welchen sich die einzelnen Maschengrößen innerhalb des Gitters nicht allzusehr voneinander unterscheiden, dann kann das in Figur 8 gezeigte Elektrodensystem mit unverschieblich feststehenden Elektroden Anwendung finden. Wie aus Figur 8 erkennbar ist, besteht jede Elektrode aus einem parallel zu den Längselementen L des Gitters verlaufenden, schmalen Elektrodenkörper 70, 71 mit in Richtung von der Symmetrieebene MS der Schweißlinien nach außen abnehmender Höhe, auf dem eine auswechselbare Verschleißschiene 72 bzw. 73 vorgesehen ist. Wie man weiter aus der den Schweißbereich einer Elektrode vergrößert darstellenden Figur 9 erkennt, kann bei dieser Anordnung stets nur der der Symmetrieebene der Schweißlinien am nächsten liegende Querdraht Q1 Kontakt mit den Elektroden bekommen, wogegen die übrigen Querdrähte Q2, Q3, die sich zwar noch im Elektrodenbereich befinden, oberhalb der Elektroden und in einem Abstand von diesen verbleiben. Ein Kurzschließen der Schweißstrecken durch diese Querdrähte ist daher nicht möglich und die Querdrahtabstände können mit dieser einfachen Einrichtung in Grenzen verändert werden, ohne daß verstellbare Elektroden, wie sie in den Figuren 6 und 7 gezeigt wurden, nötig wären.

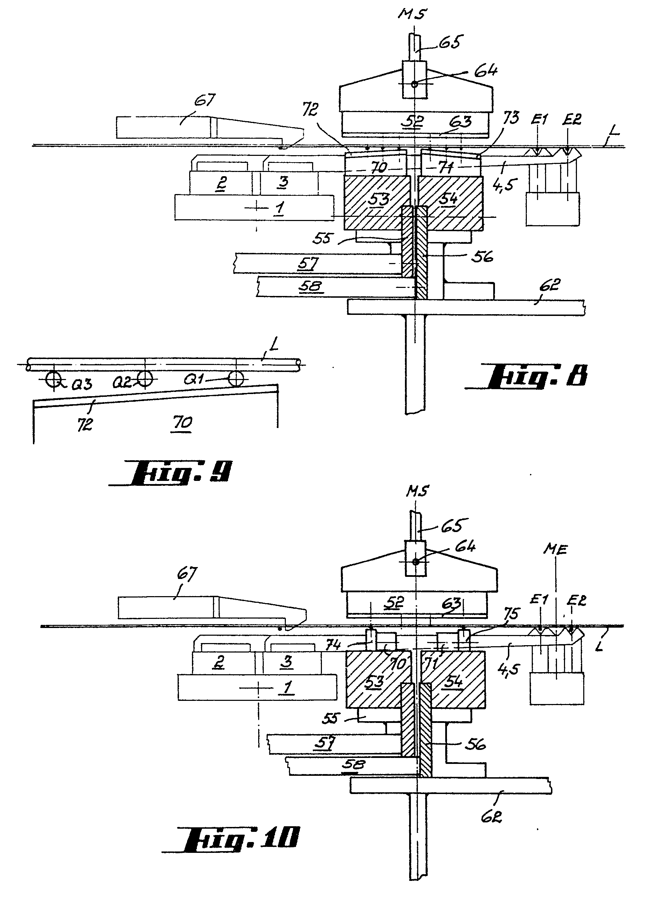

Ein besonders einfaches Elektrodensystem, das allerdings keine Änderung der Querdrahtabstände während der laufenden Produktion eines Gitters gestattet, zeigt Figur 10. Bei dieser Ausführungsform sind wieder auf den Elektrodenhaltern 53, 54 Elektrodenschienen 70, 71 angeordnet, die parallel zu den Gitterlängselementen L verlaufen. Auf den Elektrodenschienen sind die eigentlichen Schweißelektroden 74, 75 auswechselbar, verstell- und feststellbar angebracht.

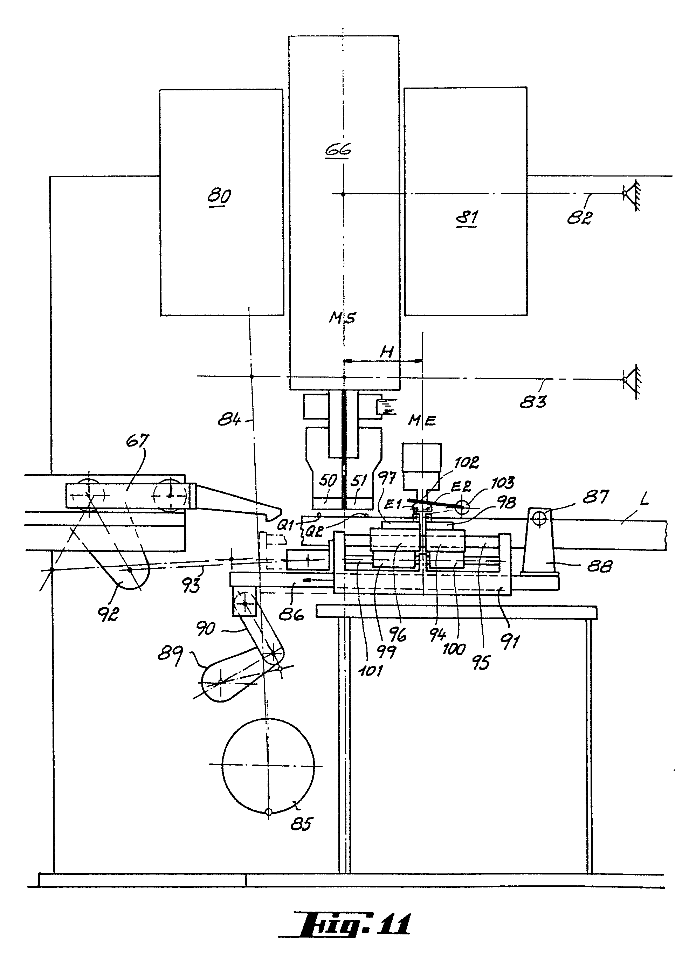

Eine Maschine, die zum Herstellen von Gitterrosten aus hohen, aber schmalen bandartigen Längselementen L bestimmt ist, in deren Schmalseiten Querstäbe Q1, Q2... so weit eingeschweißt werden sollen, daß ihre obersten Erzeugenden in gleicher Ebene mit den obersten Erzeugenden der Längselemente L liegen, zeigen schematisch die Figuren 11 und 12.

Die Schweißtransformatoren 80, 81 sind bei dieser Maschine beidseits des Elektrodenbalkens 66 angeordnet und an diesem befestigt, so daß sie mit ihrem hohen Gewicht zur Erzeugung des in diesem Falle ganz erheblichen Schweißdruckes beizutragen vermögen. Der Elektrodenbalken 66 seinerseits ist an zwei parallelen Lenkern 82, 83 angelenkt, wobei der Lenker 83 mittels einer Pleuelstange 84 mit einer Kurbel 85 verbunden ist. Mittels dieser Anordnung kann der Elektrodenbalken 66 um den erforderlichen Betrag auf- und abbewegt werden.

Die Schweißelektroden 50, 51 sind gleichfalls oberhalb der Gitterherstellungsebene angeordnet, und eine eigene Strombrücke ist nicht erforderlich, weil die Längselemente L des Gitters mit ihrer vergleichsweise sehr großen Querschnittfläche die Stromführung zwischen zwei benachbarten, von gegensinnig gepolten Elektroden angespeisten Querdrähten Q1, Q2 übernehmen können, ohne daß eine für die Längselemente nachteilige Erhitzung eintritt.

Am Maschinengehäuse ist mittels eines in einem Gelenk 87 schwenkbar gelagerten Verbindungsstückes 88 eine Gleitführung 86 angelenkt. Mittels einer Kurbelschwinge 89 und eines Lenkers 90 kann die Gleitführung 86 um das Gelenk 87 verschwenkt werden. Ein auf der Gleitführung 86 verschiebbar gelagerter Schlitten 91 kann von einer Schwinge 92 unter Mitwirkung einer Stoßstange 93 längs der Gleitführung 86 verschoben werden. Zwei weitere Schlitten 94 und 96 sind verschiebbar auf einer zweiten Gleitführung 95 gelagert, die mit dem Schlitten 91 starr verbunden ist. Die beiden Schlitten 94, 96 tragen je einen Querdrahtzubringer 97, 98 und sind starr mit zwei Kolben 99, 100 verbunden, die längs einer im Schlitten 91 ortsfesten Kolbenstange 101 verschiebbar geführt sind. In die durch gefederte Klappen verschlossenen Drahtführungen bei E1, E2 werden die Querdrähte eingeschossen und sodann mittels Querdrahtzubringerhebel 102 gegen die Wirkung der Federkraft aus den Drahtführungen heraus in Aufnahmeöffnungen bzw. Rasten der Querdrahtzubringer 97, 98 befördert. Zu diesem Zweck sind die Querdrahtzubringerhebel 102 auf einer schwenkbaren Welle 103 angebracht, die im Arbeitsrhythmus der Schweißmaschine betätigbar ist.

Da bei Maschinen zum Herstellen von Gitterrosten die Querdrähte im Verhältnis zu ihrer Länge relativ große Durchmesser haben und daher so steif sind, daß sie keiner Unterstützung im Bereich der Längselemente L des herzustellenden Rostes bedürfen, sind bei derartigen Maschinen Querdrahtzubringerorgane lediglich beidseits des Schweißbereiches notwendig und vorgesehen.

Sobald zwei Querdrähte in die Aufnahmeöffnungen bzw. Rasten der Querdrahtzubringer 97, 98 gelangt sind, bewegt sich der Schlitten 91 längs der parallel zu den Längselementen L liegenden Gleitführung 86 unter der Antriebswirkung der Schwinge 92 und der Stoßstange 93 um den Betrag H von den Drahtführungen bei E1 und E2 zum Schweißelektrodensystem.

Dieser Bewegung werden gegensinnige Relativbewegungen der Schlitten 94, 96 gegenüber dem Schlitten 91 um den Betrag x dadurch überlagert, daß die Kolben 99, 100 im gewünschten Richtungssinn mit Druckmittel beaufschlagt werden und sich daher unter Mitnahme der sich längs der Gleitführung 95 bewegenden Schlitten 94, 96 längs der Kolbenstange 101 bewegen. Die zur Erzeugung dieser Relativbewegungen erforderlichen Steuerelemente sind dieselben, die bereits im Zusammenhang mit den Figuren 4 und 5 beschrieben worden sind.

Sobald die beiden neu eingeschossenen Querdrähte in die Positionen Q1 und Q2 in Figur 11 gelangt sind, wird die Kurbelschwinge 89 in die in Figur 11 strichpunktiert angedeutete Lage verschwenkt. Dadurch wird auch die Gleitführung 86 um das Gelenk 87 geschwenkt und nimmt eine in spitzem Winkel zu den Längselementen L des Rostes verlaufende Lage an, wobei die Querdrähte in den Positionen Q1 und Q2 auf die Längselemente abgelegt werden, auf welchen sie sodann von den unter der Wirkung der Kurbel 85 zusammen mit dem Elektrodenbalken 66 abgesenkten Elektroden 50, 51 in ihrer Lage fixiert werden.

Nach der Schweißung kehrt die Schwinge 92 und mit ihr der Schlitten 91 in die Ausgangslage zurück. Da sich während dieser Bewegung der Schlitten 91 längs der noch geneigten Gleitführung 86 verschiebt, bleiben die Querdrahtzubringer während dieser Bewegungsphase außer Eingriff mit den Querdrähten. Gleichzeitig kehren auch die beiden Schlitten 94, 96, unter der Wirkung der Kolben 99, 100 längs ihrer Gleitführung 95 gleitend, in ihre Ausgangslagen zurück.

Sobald die Schlitten 91, 94 und 96 ihre Ausgangslagen erreicht haben, wird die Gleitführung 86 wieder in Parallellage zu den Längselementen L geschwenkt, worauf alle Teile zur Aufnahme neuer Querdrähte bereit stehen.

Die Schweißvorgänge selbst erfolgen bei allen Ausführungsbeispielen in bekannter Weise, wobei sowohl Wechsel- als auch Gleichstromschweißung Anwendung finden kann. Die beschriebenen Maschinen eignen sich zum Verschweißen von Gittern aus Drähten in einem sehr weiten Durchmesserbereich, etwa zwischen 1 bis 14 mm, ebenso wie zum Herstellen der im letzten Ausführungsbeispiel erwähnten Gitterroste mit bandartigen, hochkant stehenden Längselementen.

**Ansprüche**

1. Vielpunktschweißmaschine zum Herstellen von Gittern oder Gitterrosten aus einander kreuzenden Längselementen und Querdrähten, mit einem für Doppelpunktschweißungen in Richtung der Längselemente geeigneten Schweißelektrodensystem, zwei in festem gegenseitigen Abstand auf Einschußlinien (E1, E2) angeordneten Drahtführungen zum gleichzeitigen Einschießen zweier Querdrähte (Q1, Q2), auf einem gemeinsamen, in Richtung des Gittervorschubes um einen dem Abstand der Symmetrieebene (ME) der Einschußlinien von der Symmetrieebene (MS) der Schweißlinien (S1, S2, S1', S2') des Schweißelektrodensystems entsprechenden Betrag verschiebbaren Träger (1 ; 91) angeordneten Querdrahtzubringern (4, 5 ; 97, 98) und Einrichtungen zum Vorschieben des Gitters oder Gitterrostes nach jedem Schweißvorgang, dadurch gekennzeichnet, daß die Querdrahtzubringer (4, 5 ; 97, 98) entsprechend dem Hubweg (H1, H2) von einer der beiden lagenfesten Einschußlinien (E1, E2) zu einer von zwei lagenveränderlichen Schweißlinien (S1, S2 ; S1', S2') am Träger (1 ; 91) verschiebbar gelagert sind und daß Einrichtungen (2, 3, 20-23 ; 94-96, 99-101) vorgesehen sind, mittels welcher die Längen der Hubwege (H1, H2) der beiden Querdrahtzubringer (4, 5 ; 97, 98) gegenüber dem Hubweg (H) des Trägers (1 ; 91) gegensinnig um gleiche Beträge (x) veränderbar sind.

2. Schweißmaschine nach Anspruch 1, dadurch gekennzeichnet, daß am gemeinsamen Träger (1 ; 91) längs Führungen (20-23 ; 95) verschiebbar gelagerte Abstützungen (2, 3 ; 94, 96) für die Querdrahtzubringer (4, 5 ; 97, 98) und Einrichtungen (20, 21 ; 99, 100) zum gegensinnigen Verschieben dieser Abstützungen längs der Führungen, wie beispielsweise Spindelantriebe (20, 21) mit gegenläufigen Gewinden oder gegensinnig beaufschlagbare Zylinder (99, 100), vorgesehen sind.

3. Schweißmaschine nach Anspruch 1 oder 2, dadurch gekennzeichnet, daß die beiden Zubringer (4, 5 ; 97, 98) mittels ihres gemeinsamen Trägers (1 ; 91) in an sich bekannter Weise durch das gleiche Triebwerk (6, 15, 17), das auch die Hin- und Herbewegung des Trägers (1) bewirkt, oder durch ein zusätzliches Triebwerk (89, 90) am Beginn ihres Hubes (H1, H2) zu den Einschußlinien (E1, E2) für die Querdrähte (Q1, Q2) hin und am Ende ihres Hubes von der Gitterherstellungsebene weg schwenkbar sind (Figuren 2-5 und Figuren 11, 12).

4. Schweißmaschine nach einem der Ansprüche 1 bis 3, dadurch gekennzeichnet, daß die Zubringer, wie an sich bekannt, durch in Längsrichtung der Maschine verlaufende Transportarme (4, 5) gebildet sind, wobei diese Transportarme (4, 5) in gleicher Richtung von gegensinnig verschiebbaren Abstützungen (2, 3) auskragen und an ihren freien Enden, wie an sich bekannt, Rasten zur Aufnahme der Querdrähte (Q1, Q2) aufweisen (Figuren 2-5).

5. Schweißmaschine nach einem der Ansprüche 1 bis 4, dadurch gekennzeichnet, daß das Schweißelektrodensystem Paare von in Längsrichtung der Maschine gegeneinander versetzten lagenfesten Elektroden (70, 71) mit gegensinnig dachartig geneigten, vorzugsweise durch Verschleißleisten (72, 73) gebildeten wirksamen Schweißflächen aufweist (Figuren 7 und 8).

6. Schweißmaschine nach einem der Ansprüche 1 bis 4, dadurch gekennzeichnet, daß das Schweißelektrodensystem in an sich bekannter Weise Paare von Elektroden (74, 75) aufweist, die an in Längsrichtung der Maschine hintereinander auf Elektrodenhaltern (53, 54) angeordneten Elektrodenschienen (70, 71) auswechselbar und längs dieser Schienen verstellbar angebracht sind (Figur 10).

7. Schweißmaschine nach einem der Ansprüche 1 bis 4, dadurch gekennzeichnet, daß das Schweißelektrodensystem Paare von in Längsrichtung der Maschine gegeneinander versetzt angeordneten Elektroden (50, 51) aufweist und daß Einrichtungen (59, 60, 61), beispielsweise Spindeltriebe mit gegenläufigen Gewinden, zur gegensinnigen Verstellung der beiden Elektroden jedes Elektrodenpaares in Übereinstimmung mit der gegensinnigen Änderung der Längen der Hubwege (H1, H2) der beiden Querdrahtzubringer (4, 5) vorgesehen sind (Figuren 6, 7).

8. Schweißmaschine nach einem der Ansprüche 1 bis 7, dadurch gekennzeichnet, daß mehrere, während des Betriebes der Maschine vor jedem Arbeitszyklus durch eine Programmsteuerung anschaltbare Sollwertgeber für die Querdrahtabstände vorgesehen sind, die über einen Regelkreis (40-44) und einen Servomotor (29) die Einrichtungen (2, 3, 20-23 ; 94-96, 99-101) zur gegensinnigen Änderung der Längen der Hubwege (H1, H2) der beiden Zubringer (4, 5 ; 97, 98) und gegebenenfalls die Einrichtungen (59, 60, 61) zur gegensinnigen Verstellung der beiden Elektroden (50, 51) jedes Elektrodenpaares des Elektrodensystems steuern (Figur 4).

## Claims

1. Multispotwelding machine for the production of grids or gratings of longitudinal members and crosswires crossing said longitudinal members, said machine having a welding electrode system suitable for making double spot-welds in the direction of said longitudinal elements, two wire-guides arranged at a fixed distance apart on feed lines (E1, E2) for the simultaneous feeding in of two of said crosswires (Q1, Q2), crosswire transfer tools (4, 5 ; 97, 98) arranged on a common bearer (1 ; 91) shiftable in the direction of advance of said grid by an amount corresponding with the distance of the plane of symmetry (ME) midway between said feed lines from the plane of symmetry (MS) midway between said lines of weld (S1, S2, S1', S2') and means for advancing said grid or grating after each welding operation, characterized in that said crosswire transfer tools (4, 5 ; 97, 98) are shiftable in correspondance to the stroke (H1, H2) from one of the two fixed feed lines (E1, E2) to one of the two moveable lines of weld (S1, S2 ; S1', S2') on said bearer (1 ; 91) and in that means (2, 3, 20-23 ; 94-96, 99-101) are provided for changing the lengths of the strokes (H1, H2) of said two crosswire transfer tools (4, 5 ; 97, 98) with respect to the stroke (H) of said bearer (1 ; 91) in opposite senses by equal amounts (x).

2. Welding machine according to claim 1, characterized in that supports (2, 3 ; 94, 96) for said crosswire transfer tools (4, 5 ; 97, 98) are supported and shiftable along guides (20-23 ; 95) on said common bearer (1 ; 91) and means (20, 21 ; 99, 100) are provided for shifting these supports in opposite senses along said guides, e. g. screw spindle drives (20, 21) having opposed threads or piston/cylinder units (99, 100) to be acted upon in opposite senses.

3. Welding machine according to claim 1 or 2, characterized in that the two transfer tools (4, 5 ; 97, 98) are pivotable by means of their common bearer (1 ; 91) in a manner known per se by the same drive means (6, 15, 17) which also causes the to and from movement of said bearer (1), or by an additional drive means (89, 90) at the beginning of their stroke (H1, H2) toward the feed lines (E1, E2) for said crosswires (Q1, Q2) and at the end of their stroke away from the grid production plane (Figures 2-5 and Figures 11, 12).

4. Welding machine according to one of the claims 1 to 3, characterized in that said transfer tools, as known per se, are formed by transport-arms (4, 5) running in the longitudinal direction of said machine, said transport arms (4, 5) projecting in the same direction from supports (2, 3) shiftable in opposite senses and having at their free ends, as known per se, notches for picking up said crosswires (Q1, Q2) (Figures 2-5).

5. Welding machine according to one of the claims 1 to 4, characterized in that said welding electrode system comprises pairs of electrodes (70, 71) fixed in positions offset from one another in the longitudinal direction of said machine and having effective welding faces sloping in opposite senses like a roof and preferably formed of wearing-strips (72, 73) (Figures 7 and 8).

6. Welding machine according to one of the claims 1 to 4, characterized in that said welding electrode system in a manner known per se has pairs of electrodes (74, 75) arranged in an interchangeable manner behind one another in the longitudinal direction of the machine on electrode bars (70, 71) provided on electrode carriers (53, 54), said electrodes being mounted in an adjustable manner along said bars (Figure 10).

7. Welding machine according to one of the claims 1 to 4, characterized in that said welding electrode system comprises pairs of electrodes (50, 51) offset from one another in the longitudinal direction of the machine and in that means (59, 60, 61) are provided, e. g. screw spindle drives having opposed threads, for the adjustment of the two electrodes of each of said electrode pairs in opposed senses in conformity with the alteration of the lengths of stroke (H1, H2) of said two crosswire transfer tools (4, 5) in opposite senses (Figures 6, 7).

8. Welding machine according to one of the claims 1 to 7, characterized in that a number of emitters for the desired values of the crosswire pitches are provided and, during operation of said machine, are adapted to be switched on by a programme control before each working cycle to control, via a control loop (40-44) and a servomotor (29) the means (2, 3 ; 20-23 ; 94-96, 99-101) for altering the lengths of stroke (H1, H2) of said two transfer tools (4, 5 ; 96, 98) in opposite senses and, if necessary, the means (59, 60, 61) for adjustment of the two electrodes (50, 51) of each electrode pair of said electrode system in opposite senses (Figure 4).

## Revendications

1. Soudeuse par points destinée à fabriquer des treillis ou des grillages à partir d'éléments longitudinaux et de fils transversaux qui se croisent, comportant un système d'électrodes de soudage convenant pour des soudages par points doubles dans le sens des éléments longitudinaux, deux guide-fil montés à une distance réciproque fixe sur des lignes d'insertion (E1, E2) pour insérer simultanément deux fils transversaux (Q1, Q2), des dispositifs d'amenée de fils transversaux (4, 5 ; 97, 98) montés sur un support (1, 91) commun pouvant être déplacé, dans le sens d'avancement du treillis, d'une distance correspondant à l'espacement du plan de symétrie (ME) des lignes d'insertion et du plan de symétrie (MS) des lignes de soudage (S1, S2 ; S1', S2') du système d'électrodes de soudage et des dispositifs pour faire avancer le treillis ou le grillage après chaque opération de soudage, caractérisée en ce que les dispositifs d'amenée de fils transversaux (4, 5 ; 97, 98) sont montés mobiles sur le support (1 ; 91) d'une manière correspondant au trajet (H1, H2) d'une des deux lignes d'insertion fixes (E1, E2) vers une des deux lignes de soudage à position variable (S1, S2 ; S1', S2') et des dispositifs (2, 3, 20-23 ; 94-96, 99-101) sont prévus pour pouvoir modifier en sens opposés et dans des mesures égales (x), les longueurs des trajets (H1, H2) des deux dispositifs d'amenée de fils transversaux (4, 5 ; 97, 98) par rapport au trajet (H) du support (1 ; 91).

2. Soudeuse suivant la revendication 1, caractérisée en ce que sur le support commun (1 ; 91) sont prévus des éléments d'appui (2, 3 ; 94, 96) pour les dispositifs d'amenée de fils transversaux (4, 5 ; 95, 98) montés de manière à pouvoir coulisser le long de guides (20-23 ; 95) et des dispositifs (20, 21 ; 99, 100) servant à déplacer ces éléments d'appui en sens opposés le long des guides, comme par exemple des dispositifs d'entraînement à tige filetée (20, 21) à pas de vis opposés ou des vérins (99, 100) pouvant être sollicités en sens opposés.

3. Soudeuse suivant la revendication 1 ou 2, caractérisée en ce que les deux dispositifs d'amenée (4, 5 ; 97, 98) peuvent pivoter au moyen de leurs supports communs (1 ; 91) d'une manière bien connue à l'intervention du mécanisme d'entraînement (6, 15, 17) qui produit aussi le mouvement de va-et-vient du support (1) ou à l'intervention d'un mécanisme d'entraînement supplémentaire (89, 90) au début de leur trajet (H1, H2) vers les lignes d'insertion (E1, E2) pour les fils transversaux (Q1, Q2) et à la fin de leur trajet à partir du plan de fabrication du treillis (Fig. 2 à 5 et 11, 12).

4. Soudeuse suivant l'une quelconque des revendications 1 à 3, caractérisée en ce que les dispositifs d'amenée, d'une manière bien connue, sont formés par des bras transporteurs (4, 5) qui s'étendent dans le sens longitudinal de la machine, étant entendu que ces bras transporteurs (4, 5) s'étendent dans la même direction à partir d'éléments d'appui (2, 3) pouvant se déplacer en sens opposés et présentant, à leurs extrémités libres, d'une manière connue, des encoches destinées à recevoir les fils transversaux (Q1, Q2) (Fig. 2 à 5).

5. Soudeuse suivant l'une quelconque des revendications 1 à 4, caractérisée en ce que le système d'électrodes de soudage comporte des paires d'électrodes fixes (70, 71) décalées l'une de l'autre dans le sens longitudinal de la machine et présentant des surfaces de soudage actives formées, de préférence, par des barres d'usure (72, 73) et inclinées en sens opposés à la manière des deux pans d'un toit (Fig. 7 et 8).

6. Soudeuse suivant l'une quelconque des revendications 1 à 4, caractérisée en ce que le système d'électrodes de soudage comporte d'une manière connue des paires d'électrodes (74, 75) qui sont montées de façon remplaçable sur des barres d'électrodes (70, 71) disposées l'une derrière l'autre dans le sens longitudinal de la machine sur des supports d'électrodes (53, 54) et peuvent être réglées ou déplacées le long de ces barres (Fig. 10).

7. Soudeuse suivant l'une quelconque des revendications 1 à 4, caractérisée en ce que le système d'électrodes de soudage comprend des paires d'électrodes (50, 51) décalées l'une de l'autre dans le sens longitudinal de la soudeuse et des dispositifs (59, 60, 61), par exemple des dispositifs d'entraînement à tiges filetées à pas de vis opposés sont prévus pour déplacer en sens opposés les deux électrodes de chaque paire d'électrodes en concordance avec la modification en sens opposés des longueurs des trajets (H1, H2) des deux dispositifs d'amenée de fils transversaux (4, 5) (Fig. 6, 7).

8. Soudeuse suivant l'une quelconque des revendications 1 à 7, caractérisée en ce que plusieurs générateurs de valeurs de consigne pour les espacements des fils transversaux pouvant être enclenchés par une commande à programme avant chaque cycle de travail pendant le fonctionnement de la machine sont prévus et commandent, par l'intermédiaire d'un circuit de réglage (40, 44) et d'un servomoteur (29), les dispositifs (2, 3 ; 20-23 ; 94-96, 99-101) pour modifier en sens opposés les longueurs des trajets (H1, H2) des deux dispositifs d'amenée (4, 5 ; 97, 98) et, le cas échéant, les dispositifs (59, 60, 61) pour le réglage en sens opposés des deux électrodes (50, 51) de chaque paire d'électrodes du système d'électrodes (Fig. 4).

Fig. 1

$$H1 = H + x \qquad H2 = H - x$$

Fig. 12

*Fig. 2*

*Fig. 3*

2

**Fig. 4**

**Fig. 5**

Fig. 6

Fig. 7

4

Fig. 8

Fig. 9

Fig. 10

Fig. 11